Europäisches Patentamt

European Patent Office

Office européen des brevets

(19)

(11) Numéro de publication : **0 409 685 B1**

(12) **FASCICULE DE BREVET EUROPEEN**

(45) Date de publication du fascicule du brevet :
04.11.92 Bulletin 92/45

(51) Int. Cl.⁵ : **F24C 15/32**

(21) Numéro de dépôt : **90401902.3**

(22) Date de dépôt : **29.06.90**

(54) **Four perfectionné fonctionnant à la vapeur et/ou au gaz.**

(30) Priorité : **19.07.89 FR 8909726**

(43) Date de publication de la demande :
**23.01.91 Bulletin 91/04**

(45) Mention de la délivrance du brevet :
**04.11.92 Bulletin 92/45**

(84) Etats contractants désignés :
**AT BE CH DE DK ES GB GR IT LI LU NL SE**

(56) Documents cités :
**EP-A- 0 277 888
FR-A- 2 091 783
US-A- 4 671 250**

(73) Titulaire : **GAZ DE FRANCE
23, rue Philibert Delorme
F-75017 Paris (FR)**

(72) Inventeur : **Laforet, Jean
8 rue de Reims
F-94230 Cachan (FR)**
Inventeur : **Rigaud, André
53 Avenue de Rigny
F-94360 Bry-sur-Marne (FR)**

(74) Mandataire : **Durand, Yves Armand Louis et al
CABINET WEINSTEIN 20, Avenue de
Friedland
F-75008 Paris (FR)**

**Description**

La présente invention a essentiellement pour objet un four perfectionné qui fonctionne à la vapeur et/ou au gaz et qui permet notamment la cuisson de produits alimentaires.

On connaît déjà des fours fonctionnant à la vapeur et au gaz et comprenant essentiellement une enceinte thermiquement isolée renfermant d'une part un brûleur à gaz relié à un système d'alimentation d'un mélange de gaz et d'air de combustion sous pression, et d'autre part une turbine assurant le brassage de l'atmosphère chauffée dans l'enceinte (EP-A-O 277 888).

L'enceinte est également reliée à un générateur de vapeur d'eau, de sorte qu'elle peut être chauffée simultanément par la vapeur et par le gaz.

Toutefois, dans ces fours à convection forcée, lorsqu'on chauffe l'enceinte avec de la vapeur, de l'eau parvient au brûleur et stagne dans celui-ci, ce qui peut provoquer des détériorations. Cela provient du fait que le ventilateur amenant l'air de combustion au brûleur ne fournit pas une contre-pression suffisante et de nature à provoquer le refoulement ou l'échappement de la vapeur d'eau par l'intermédiaire du brûleur vers l'extérieur.

Par ailleurs, le brûleur à gaz se remplit d'eau notamment dans le cas d'un nettoyage du four.

Enfin, dans ce genre de four, le brûleur est équipé de plaquettes céramiques constituant la surface d'accrochage de la flamme et ces plaquettes ne résistent pas à l'humidité et aux variations brusques d'hygrométrie.

Aussi, la présente invention a pour but de remédier à tous ces inconvénients en proposant un four perfectionné avec un emplacement et une conception de brûleur qui sont tels que ce brûleur ne risque aucune détérioration par l'humidité et conserve une excellente fiabilité de fonctionnement, même à la longue et quel que soit le mode de fonctionnement du four.

A cet effet, l'invention a pour objet un four perfectionné fonctionnant à la vapeur et/ou au gaz et permettant notamment la cuisson de produits alimentaires, du type comprenant essentiellement une enceinte renfermant d'une part au moins un brûleur à gaz relié à un système d'alimentation d'un mélange de gaz et d'air de combustion sous pression, et d'autre part une turbine de brassage de l'atmosphère chauffée dans l'enceinte, laquelle enceinte est reliée à un générateur de vapeur d'eau, caractérisé en ce que ledit brûleur est monté en partie haute de l'enceinte et de façon retournée vers le bas de cette enceinte pour que les condensats et/ou les projections d'eau dans l'enceinte n'affectent pas le brûleur, et en ce qu'une vanne quart de tour est montée sur le conduit d'alimentation en mélange gaz-air au brûleur afin d'éviter toute migration d'humidité vers le système d'alimentation.

Suivant une autre caractéristique de ce four, le brûleur est constitué par un tube fixé sur la paroi de plafond de l'enceinte et muni d'une multiplicité de fentes qui s'étendent orthogonalement à l'axe du tube.

On précisera encore ici que le tube est extérieurement muni d'au moins deux déflecteurs fixés à la base des fentes pour piloter les flammes du brûleur, tandis qu'une tôle perforée de répartition des flammes s'étend à l'intérieur du tube suivant un plan sensiblement orthogonal à celui des déflecteurs.

Selon encore une autre caractéristique du four de cette invention, l'enceinte est intérieurement munie d'une tôle déflectrice s'étendant entre les parties haute et basse de l'enceinte et interposée entre le brûleur et la turbine.

Cette tôle déflectrice est munie d'une grille au droit de la turbine.

Selon encore une autre caractéristique de l'invention, la vanne quart de tour précitée est commandée par un servo-moteur.

Mais d'autres avantages et caractéristiques de l'invention apparaîtront mieux dans la description détaillée qui suit et se réfère aux dessins annexés, donnés uniquement à titre d'exemple et dans lesquels:

La figure 1 est une vue schématique et de dessus d'un four conforme à cette invention, selon la ligne I-I de la figure 2.

La figure 2 est une vue schématique et en coupe du four suivant la ligne II-II de la figure 1.

La figure 3 est une vue de côté du brûleur avec arrachements partiels, et

La figure 4 est une vue en coupe de ce brûleur, suivant la ligne IV-IV de la figure 3.

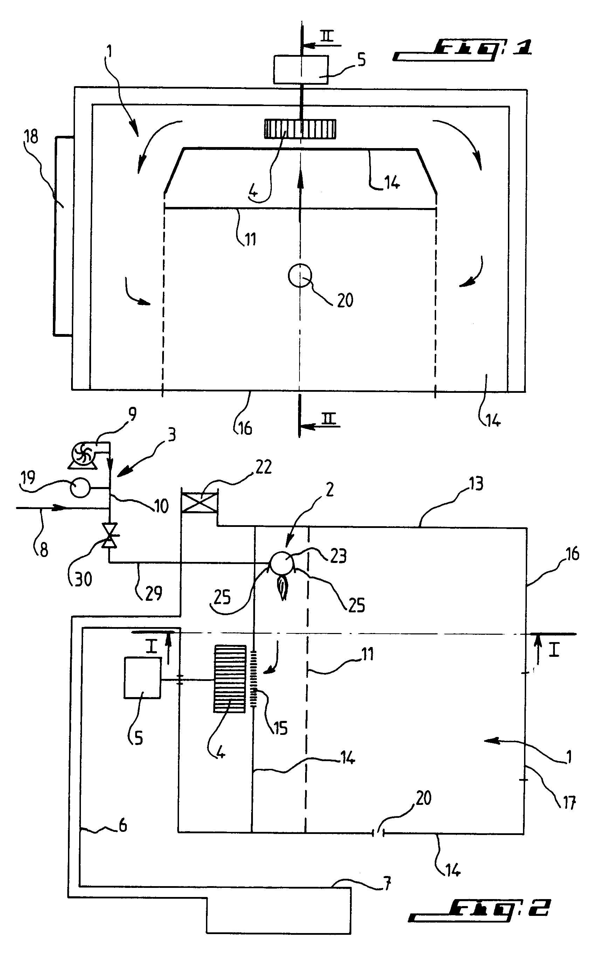

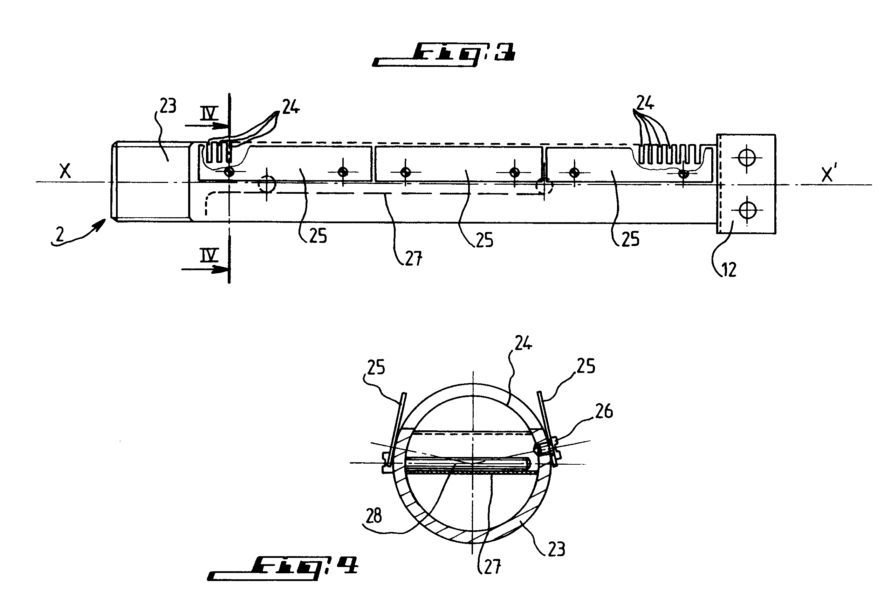

En se reportant notamment aux figures 1 et 2, on voit un four essentiellement constitué par une enceinte 1 qui renferme un brûleur à gaz 2 relié à un système 3 d'alimentation d'un mélange de gaz et d'air de combustion sous pression.

L'enceinte 1 contient également une turbine 4 entraînée par un moteur 5.

En outre, l'enceinte 1, comme on le voit bien sur la figure 2 est reliée par une conduite 6 à un générateur de vapeur montré schématiquement en 7.

Le système 3 d'alimentation du brûleur 2 en mélange gaz-air de combustion comprend notamment une arrivée 8 de gaz et un ventilateur 9 susceptible d'acheminer par la conduite 10 de l'air sous pression en mélange avec le gaz vers ledit brûleur 2.

On a montré en 11 une grille de protection contre les graisses ou analogues provenant de la cuisson des denrées alimentaires dans l'enceinte 1.

Conformément à l'invention et comme on le voit bien sur la figure 2, le brûleur 2 est monté en partie haute de l'enceinte 1 et de façon renversée ou retournée vers le bas de cette enceinte, de manière que les flammes soient elles aussi dirigées vers le bas de l'enceinte.

Ce brûleur 2, comme le voit sur la figure 3, peut être fixé par une ou plusieurs attaches telles que 12, sur par exemple la paroi de plafond 13 (figure 2) du four.

On a montré en 14 sur les figures 1 et 2 une tôle déflectrice s'étendant entre les parois de plafond 13 et de plancher 14 de l'enceinte 1, cette tôle déflectrice étant interposée entre la turbine 4 et le brûleur 2.

On précisera ici que la tôle déflectrice 14 comporte, comme on le voit bien sur la figure 2, une grille ou analogue 15 se situant au droit de la turbine 4 pour favoriser la convection forcée de l'air chauffé dans l'enceinte, comme matérialisé par des flèches sur la figure 1. On remarquera ici que le brûleur 2 en partie haute de l'enceinte 1 est interposé entre la tôle déflectrice 14 et la grille de protection 11 qui sépare, en quelque sorte, la partie fonctionnelle et arrière du four de la partie avant et de cuisson de ce four, laquelle partie avant est munie d'une porte 16 et d'une vitre 17.

On a montré schématiquement en 18 sur la figure 1 un tableau de commande du four, et en 19 sur la figure 2 un pressostat monté sur la conduite 10.

La paroi de plancher ou de fond 14 de l'enceinte 1 comporte un orifice 20 d'évacuation des condensats.

La paroi de plafond ou supérieure 13 de l'enceinte 1 est munie d'un clapet 22 assurant la liaison de l'enceinte 1 avec l'atmosphère extérieure.

En se reportant plus particulièrement aux figures 3 et 4, on voit que le brûleur 2 est constitué par un tube 23 fixé, comme on l'a expliqué précédemment, à la paroi 13 de l'enceinte 1, et qui est muni d'une multiplicité de fentes 24, ces fentes étant par exemple au nombre de 65 et étant réparties uniformément sur sensiblement toute la longueur du tube 23. Ces fentes 24 s'entendent suivant un peu moins de la moitié de la périphérie du tube 23, comme on le voit sur la figure 4, et sont orthogonales à l'axe X-X' dudit tube.

On a montré en 25 des plaques déflectrices fixées sensiblement à la base des fentes 24, au moyen de vis 26 par exemple. Ces plaques déflectrices 25 peuvent, comme on le voit bien sur la figure 3, être constituées par une succession de plaques vissées sur la paroi externe du tube 23.

Ces plaques déflectrices 25 situées sensiblement au niveau de l'endroit où prennent naissance les fentes arquées 24 assurent un pilotage efficace des flammes qui demeurent stables.

On a montré en 27 sur les figures 3 et 4 une tôle perforée s'étendant à l'intérieur du tube 23 suivant un plan sensiblement orthogonal à celui des déflecteurs 25. Cette tôle perforée assure une bonne répartition des flammes sur toute la section de sortie du brûleur. La tôle perforée 27 est fixée au tube 23 à l'aide de vis 28 par exemple.

Le brûleur qui vient d'être décrit est muni d'électrodes (non représentées) pour l'allumage et la détection des flammes.

Revenant à la figure 2, on voit que la conduite 29 amenant le mélange gaz-air de combustion au brûleur 2 est équipée d'une vanne quart de tour 30 commandée par un servo-moteur (non représenté), et évitant avantageusement toute migration d'humidité vers l'amont, c'est-à-dire vers le système d'alimentation en gaz-air de combustion montré schématiquement en 8, 9 et 10.

Mais pour une meilleure compréhension de l'invention, on décrira ci-après le fonctionnement du four qui vient d'être décrit.

Lorsque l'utilisateur désire effectuer une cuisson à la vapeur, le servo-moteur manoeuvre la vanne quart de tour 30 qui se ferme. La vapeur d'eau ne peut donc pas aller vers l'extérieur via le brûleur 2 et la conduite 29, étant entendu que le clapet 22 est fermé. Dès lors, toute surpression de vapeur sera évacuée par l'orifice prévu pour les condensats.

Si l'utilisateur désire passer de la cuisson à la vapeur à une cuisson en mixte (vapeur et gaz) ou à une cuisson par le gaz seul, le clapet 22 s'ouvre ainsi que la vanne quart de tour 30 précédemment fermée.

Une temporisation (non représentée) déclenche alors la mise en route du ventilateur 9 produisant de l'air de combustion sous pression qui est amené au brûleur. Dès lors, les électrodes d'allumage et de détection de flammes seront séchées, de même que le brûleur qui est nécessairement en contact avec l'atmosphère humide régnant dans l'enceinte 1 du four.

Par conséquent, on sera certain que le brûleur pourra s'allumer et donc fonctionner pour poursuivre la cuisson.

On a donc réalisé suivant l'invention un four perfectionné fonctionnant à la vapeur et/ou au gaz et évitant avantageusement toute perturbation du brûleur par l'humidité grâce à un montage en position haute et retournée de ce brûleur, grâce à la structure de ce brûleur qui est particulièrement adaptée à un fonctionnement en atmosphère de vapeur d'eau, et grâce à une vanne quart de tour empêchant toute migration de la vapeur d'eau vers le système d'alimentation du brûleur en mélange gaz-air de combustion.

Le générateur de vapeur équipant le four de cette invention peut être réalisé d'une manière quelconque et comporter par exemple un échangeur se composant d'une pluralité de tubes de section rectangulaire soudés les uns aux autres suivant leur largeur, ce qui procure une plus grande compacité par rapport à une structure classique à tubes espacés.

## Revendications

1. Four perfectionné fonctionnant à la vapeur et/ou au gaz et permettant notamment la cuisson de produits alimentaires, du type comprenant essentiellement une enceinte (1) renfermant d'une part au moins un brûleur à gaz (2) relié à un système d'alimentation d'un mélange de gaz et d'air de combustion sous pression, et d'autre part une turbine (4) de brassage de l'atmosphère chauffée dans l'enceinte (1), laquelle enceinte est reliée à un générateur de vapeur d'eau (7), caractérisé en ce que ledit brûleur (2) est monté en partie haute de l'enceinte (1) et de façon retournée vers le bas de cette enceinte pour que les condensats et/ou les projections d'eau dans l'enceinte (1) n'affectent pas le brûleur et en ce qu'une vanne quart de tour (30) est montée sur le conduit d'alimentation en mélange gaz-air au brûleur (2) afin d'éviter toute migration d'humidité vers le système d'alimentation.

2. Four selon la revendication 1, caractérisé en ce que le brûleur précité (2) est constitué par un tube (23) fixé sur la paroi de plafond (13) de l'enceinte (1) et muni d'une multiplicité de fentes (24) qui s'étendent orthogonalement à l'axe (X-X') du tube.

3. Four selon la revendication 2, caractérisé en ce que le tube précité (23) est extérieurement muni d'au moins deux déflecteurs (25) fixés à la base des fentes (24) pour piloter les flammes du brûleur, tandis qu'une tôle perforée (27) de répartition des flammes s'étend à l'intérieur du tube (23) suivant un plan sensiblement orthogonal à celui des déflecteurs (25).

4. Four selon l'une des revendications 1 à 3, caractérisé en ce que l'enceinte (1) est intérieurement munie d'une tôle déflectrice (14) s'étendant entre les parties haute et basse de l'enceinte (1) et interposée entre le brûleur (2) et la turbine (4).

5. Four selon la revendication 4, caractérisé en ce que la tôle déflectrice précitée (14) est munie d'une grille (15) au droit de la turbine (4).

6. Four selon l'une des revendications précédentes, caractérisé en ce que la vanne quart de tour (30) est commandée par un servo-moteur.

## Claims

1. Improved oven operating with steam and/or with gas and allowing in particular the baking of foodstuff products, of the type essentially comprising an enclosure (1) containing on the one hand at least one gas burner (2) connected to a system for the supply of a mixture of gas and of combustion air under pressure and on the other hand a turbine (4) for the stirring of the heated atmosphere within the enclosure (1), which enclosure is connected to a steam generator (7), characterized in that the said burner (2) is mounted at the upper portion of the enclosure (1) and in a manner turned downwards of this enclosure in order that the water condensates and/or projections within the enclosure (1) do not affect the burner and in that a quarter turn valve (30) is mounted on the duct for feeding the burner (2) with the gas-air mixture in order to avoid any migration of moisture towards the feeding system.

2. Oven according to claim 1, characterized in that the aforesaid burner (2) is constituted by a tube (23) fastened onto the sealing wall (13) of the enclosure (1) and provided with a multiplicity of slots (24) which extend orthogonally to the axis (X-X') of the tube.

3. Oven according to claim 2, characterized in that the aforesaid tube (23) is externally provided with at least two deflectors (25) fastened at the base of the slots (24) for piloting the flames of the burner whereas a perforated metal sheet (27) for the distribution of the flames is extending inside of the tube (23) along a plane substantially orthogonal to that of the deflectors (25).

4. Oven according to one of claims 1 to 3, characterized in that the enclosure (1) is internally provided with a a deflecting metal sheet (14) extending between the upper and lower parts of the enclosure (1) and interposed between the burner (2) and the turbine (4).

5. Oven according to claim 4, characterized in that the aforesaid deflecting metal sheet (14) is provided with a grid (15) at the level of the turbine (4).

6. Oven according to one of the foregoing claims, characterized in that the quarter turn valve (30) is controlled by a servo-motor.

## Patentansprüche

1. Mit Dampf und/oder Gas betriebener und insbesondere das Kochen von Nahrungsmitteln gestattender verbesserter Ofen, der im wesentlichen eine Umhüllung (1) aufweisenden Gattung, die einerseits wenigstens einen mit einem System zur Zufuhr eines Gemisches aus Gas und aus Verbrennungsluf unter Druck verbundenen Gasbrenner (2) und andererseits eine Turbine (4) zum Durchrühren der in der Umhüllung (1) erhitzten Atmosphäre einschliesst, welche Umhüllung mit einem Wasserdampferzeuger (7) verbunden ist, dadurch gekennzeichnet, dass der besagte Brenner (2) am oberen Teil der Umhüllung (1) und in nach unten dieser Umhüllung gekehrten Weise angeordnet ist, damit die Wasserkondensate und/oder -spritzer in der Umhüllung (1) den Brenner nicht beeinträchtigen und dass ein Vierteldrehungsventil (30) an der Leitung zur Speisung des Brenners (2) mit einem Gas-Luftgemisch angeordnet ist, um jede Wanderung von Feuchtigkeit zum Speisesystem hin zu verhindern.

2. Ofen nach Anspruch 1, dadurch gekennzeichnet, dass der vorgenannte Brenner (2) durch ein an der Deckwand (13) der Umhüllung (1) befestigtes Rohr (23) gebildet wird, das mit einer Vielzahl von Schlitzen (24), die orthogonal zu der Achse (X-X') des Rohres verlaufen, versehen ist.

3. Ofen nach Anspruch 2, dadurch gekennzeichnet, dass das vorgennante Rohr (23) aussen mit wenigstens zwei an dem Grund der Schlitzen (24) befestigten Ablenkern (25) versehen ist, um die Flammen des Brenners zu steuern, während ein gelochtes Blech (27) zur Verteilung der Flammen sich innerhalb des Rohres (23) entlang einer Ebene erstreckt, die etwa orthogonal zu derjenigen der Ablenker (25) ist.

4. Ofen nach einem der Ansprüche 1 bis 3, dadurch gekennzeichnet, dass die Umhüllung (1) innen mit einem sich zwischen dem oberen und unteren Teil der Umhüllung (1) erstreckenden und zwischen dem Brenner (2) und der Turbine (4) eingefügten Ablenkblech (14) versehen ist.

5. Ofen nach Anspruch 4, dadurch gekennzeichnet, dass das vorgenannte Ablenkblech (14) mit einem Gitter (15) in Höhe der Turbine (4) versehen ist.

6. Ofen nach einem der vorangehenden Ansprüche, dadurch gekennzeichnet, dass das Vierteldrehungsventil (30) von einem Servomotor gesteuert wird.

Fig. 1

Fig. 2

_Fig. 3_

_Fig. 4_

EP 0 409 685 B1